# EUROPEAN PATENT APPLICATION

(11) **EP 3 506 696 A1**
(43) Date of publication of application: **03.07.2019**
(21) Application number: 16917229.3
(22) Date of filing: 29.09.2016
(51) Int. Cl.: H04W 72/04, H04B 7/26

(54) **DATA TRANSMISSION METHOD AND DEVICE**

(71) Applicant: Huawei Technologies Co., Ltd., Longgang District Shenzhen, Guangdong 518129 (CN)
(72) Inventor: SU, Liyan, Shenzhen Guangdong 518129 (CN); LI, Chaojun, Shenzhen Guangdong 518129 (CN); SHAO, Jiafeng, Shenzhen Guangdong 518129 (CN)
(74) Representative: Epping - Hermann - Fischer
(86) International application number: PCT/CN2016/100952
(87) International publication number: WO 2018/058475

(57) **Abstract**

Embodiments of the present invention relate to the communications field, and disclose a data transmission method and a device, to resolve a problem of a waste of transmission resources caused by transmitting downlink data by using only some symbols included in a DwPTS. A specific solution is: A network device sends second downlink data in a second time interval, where the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval includes N symbols, where N is an integer greater than or equal to 2 and less than or equal to 6. The embodiments of the present invention are applied to a data transmission process.

## Description

### TECHNICAL FIELD

Embodiments of the present invention relate to the communications field, and in particular, to a data transmission method and a device.

### BACKGROUND

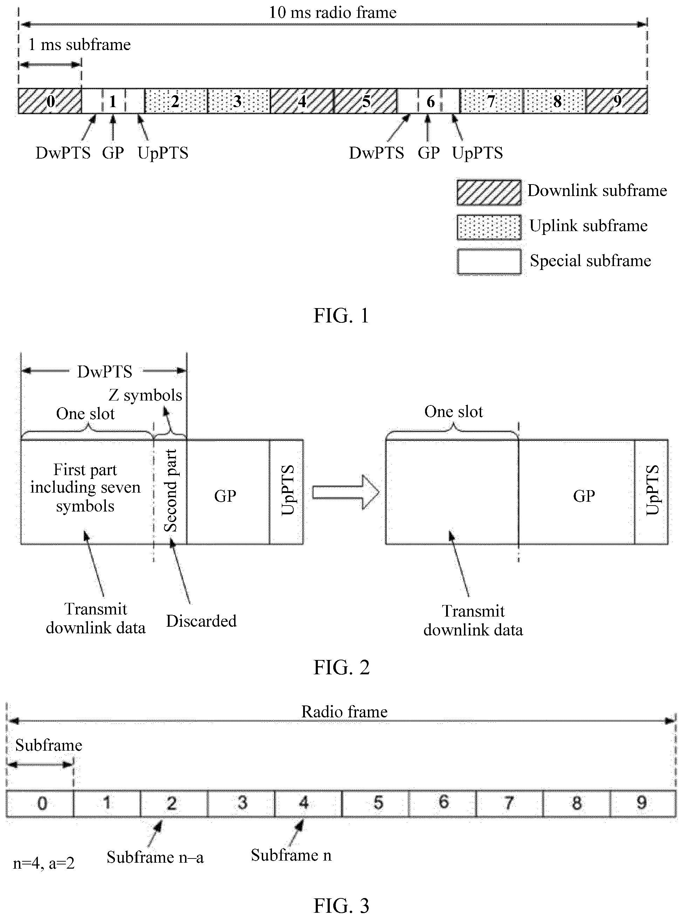

A Long Term Evolution (Long Term Evolution, LTE) system is classified into a frequency division duplex system and a time division duplex (Time Division Duplex, TDD) system. A frame structure defined in the TDD system is shown in FIG. 1. Specifically, one 10 millisecond (ms) radio frame includes ten 1 ms subframes, including at least one downlink subframe, at least one uplink subframe, and at least one special subframe. The downlink subframe may be used to transmit downlink data, the uplink subframe may be used to transmit uplink data, and the special subframe includes a downlink pilot timeslot (Downlink Pilot TimeSlot, DwPTS), a guard period (Guard Period, GP), and an uplink pilot timeslot (Uplink Pilot TimeSlot, UpPTS). In addition, different configurations are designed for the special subframe in the TDD system. For example, when a normal cyclic prefix (Cyclic Prefix, CP) is used in the TDD system (when the normal CP is used in the TDD system, one subframe includes 14 symbols), configurations of the special subframe are shown in Table 1. Table 1 shows quantities of symbols respectively occupied in the DwPTS and the UpPTS in cases of different configurations.

**Table 1**

| Special subframe configuration | 0 | 1 | 2 | 3 | 4 | 5 | 6 | 7 | 8 | 9 |
|---|---|---|---|---|---|---|---|---|---|---|
| DwPTS | 3 | 9 | 10 | 11 | 12 | 3 | 9 | 10 | 11 | 6 |
| UpPTS | 1 | | | | | 2 | | | | |

In addition, as new services have a higher latency requirement, a latency reduction (Latency Reduction) technology is introduced into the TDD system. In the technology, a conventional one-subframe transmission time interval (transmission time interval, TTI) is shortened to a half-a-subframe (one slot) shortened transmission time interval (shortened TTI, sTTI).

In the TDD system into which the latency reduction technology is introduced, in an example in which the normal CP is used in the TDD system, for configurations other than #0, #5, and #9 in Table 1, a solution of transmitting downlink data by using the DwPTS included in the special subframe is provided in the prior art. Specifically, as shown in FIG. 2, in the solution, the DwPTS included in the special subframe is divided into two parts. A first part includes seven symbols. That is, duration of the first part is one slot (where one slot is equal to 0.5 ms). A second part includes remaining Z symbols (where Z is an integer greater than or equal to 2 and less than or equal to 5). In addition, only the first part included in the DwPTS is used to transmit the downlink data, and the second part is not used to transmit the downlink data. In the prior art, only some symbols included in the DwPTS are used to transmit the downlink data, leading to a waste of transmission resources.

### SUMMARY

Embodiments of the present invention provide a frame structure, a data transmission method using the frame structure, and a device, to resolve a problem of a waste of transmission resources caused by transmitting downlink data by using only some symbols included in a DwPTS.

To achieve the foregoing objective, the following technical solutions are used in the embodiments of the present invention.

According to a first aspect of the embodiments of the present invention, a data transmission method is provided. The method is applied to a TDD system, and includes:
sending, by a network device, second downlink data in a second time interval that is in the second slot of a first special subframe or the first slot of a second special subframe, where the first special subframe is a special subframe of which downlink pilot timeslot duration is greater than 0.5 millisecond, the second special subframe is a special subframe of which downlink pilot timeslot duration is less than 0.5 millisecond, and the second time interval includes N symbols, where N is an integer greater than or equal to 2 and less than or equal to 6.

When a normal CP is used in the TDD system, the second time interval includes N symbols, where N is an integer greater than or equal to 2 and less than or equal to 6. When an extended CP is used in the TDD system, the second time interval includes M symbols, where M is an integer greater than or equal to 2 and less than or equal to 5.

According to the data transmission method provided in this embodiment of the present invention, the network device sends first downlink data in a first time interval, and sends the second downlink data in the second time interval, where the second time interval is in the second slot of the first special subframe or the first slot of the second special subframe. In this way, all symbols in a DwPTS included in a special subframe can be effectively used to transmit downlink data, thereby avoiding a waste of transmission resources.

With reference to the first aspect, in a possible implementation, the data transmission method provided in this embodiment of the present invention may further include: sending, by the network device, first downlink data in a first time interval that is in the first slot of the first special subframe.

When the normal CP is used in the TDD system, the first time interval includes seven symbols. When the extended CP is used in the TDD system, the first time interval includes six symbols.

With reference to the first aspect and the foregoing possible implementation, in another possible implementation, to increase an amount of data borne in the second time interval, the data transmission method provided in this embodiment of the present invention may further include: sending, by the network device, second downlink control information (Downlink Control Information, DCI) including control information used to indicate transmission of the second downlink data, where the second DCI is in the first slot of the first special subframe, or the second DCI is in a slot that is before the second special subframe and is adjacent to the second special subframe.

With reference to the first aspect and the foregoing possible implementations, in another possible implementation, the data transmission method provided in this embodiment of the present invention may further include: sending, by the network device, first DCI including control information used to indicate transmission of the first downlink data, where the first DCI is in the first slot of the first special subframe.

With reference to the first aspect and the foregoing possible implementation, in another possible implementation, the second DCI including the control information used to indicate the transmission of the second downlink data further includes scheduling information used to indicate transmission of the first downlink data.

With reference to the first aspect and the foregoing possible implementations, in another possible implementation, to effectively reduce a feedback latency, after the sending, by a network device, second downlink data in a second time interval, the data transmission method provided in this embodiment of the present invention may further include: receiving, by the network device, reception status information of the second downlink data in an uplink slot n, where a start location of the uplink slot n and a start location of the second time interval are spaced by at least k-i slots, where k is an integer greater than or equal to 1 and less than or equal to 8, and i is a non-negative integer less than k.

With reference to the first aspect and the foregoing possible implementations, in another possible implementation, after the sending, by the network device, first downlink data in a first time interval, the data transmission method provided in this embodiment of the present invention may further include: receiving, by the network device, reception status information of the first downlink data in an uplink slot m, where a start location of the uplink slot m and a start location of the first time interval are spaced by at least k slots, where k is an integer greater than or equal to 1 and less than or equal to 8.

According to a second aspect of the embodiments of the present invention, a data transmission method is provided. The method is applied to a TDD system, and includes:
receiving, by a terminal device, second downlink data in a second time interval that is in the second slot of a first special subframe or the first slot of a second special subframe, where the first special subframe is a special subframe of which downlink pilot timeslot duration is greater than 0.5 millisecond, the second special subframe is a special subframe of which downlink pilot timeslot duration is less than 0.5 millisecond, and the second time interval includes N symbols, where N is an integer greater than or equal to 2 and less than or equal to 6.

According to the data transmission method provided in this embodiment of the present invention, the terminal device receives first downlink data in a first time interval, and receives the second downlink data in the second time interval, where the second time interval is in the second slot of the first special subframe or the first slot of the second special subframe. In this way, all symbols in a DwPTS included in a special subframe can be effectively used to transmit downlink data, thereby avoiding a waste of transmission resources.

With reference to the second aspect, in a possible implementation, the data transmission method provided in this embodiment of the present invention may further include: receiving, by the terminal device, first downlink data in a first time interval that is in the first slot of the first special subframe.

With reference to the second aspect and the foregoing possible implementation, in another possible implementation, to increase an amount of data borne in the second time interval, the data transmission method provided in this embodiment of the present invention may further include: receiving, by the terminal device, second DCI including control information used to indicate transmission of the second downlink data, where the second DCI is in the first slot of the first special subframe, or the second DCI is in a slot that is before the second special subframe and is adjacent to the second special subframe.

With reference to the second aspect and the foregoing possible implementations, in another possible implementation, the data transmission method provided in this embodiment of the present invention may further include: receiving, by the terminal device, first DCI including control information used to indicate transmission of the first downlink data, where the first DCI is in the first slot of the first special subframe.

With reference to the second aspect and the foregoing possible implementation, in another possible implementation, the second DCI including the control information used to indicate the transmission of the second downlink data further includes scheduling information used to indicate transmission of the first downlink data.

With reference to the second aspect and the foregoing possible implementations, in another possible implementation, to reduce a feedback latency, after the receiving, by a terminal device, second downlink data in a second time interval, the data transmission method provided in this embodiment of the present invention may further include: sending, by the terminal device, reception status information of the second downlink data in an uplink slot n, where a start location of the uplink slot n and a start location of the second time interval are spaced by at least k-i slots, where k is an integer greater than or equal to 1 and less than or equal to 8, and i is a non-negative integer less than k.

With reference to the second aspect and the foregoing possible implementations, in another possible implementation, after the receiving, by the terminal device, first downlink data in a first time interval, the data transmission method provided in this embodiment of the present invention may further include: sending, by the terminal device, reception status information of the first downlink data in an uplink slot m, where a start location of the uplink slot m and a start location of the first time interval are spaced by at least k slots, where k is an integer greater than or equal to 1 and less than or equal to 8.

With reference to the second aspect and the foregoing possible implementations, in another possible implementation, to reduce detection costs of the terminal device, when the terminal device needs to receive retransmitted data in the second time interval, the data transmission method provided in this embodiment of the present invention may further include: determining, by the terminal device, whether a quantity of symbols included in the second time interval is not less than a preset threshold; and if it is determined that the quantity of symbols included in the second time interval is less than the preset threshold, skipping receiving, by the terminal device, the retransmitted data, and sending reception status information, that is, negative acknowledgement (Negative acknowledgement, NACK), of the retransmitted data in an uplink slot s, where a start location of the uplink slot s and the start location of the second time interval are spaced by at least k-i slots, where k is an integer greater than or equal to 1 and less than or equal to 8, and i is a non-negative integer less than k; or receiving, by the terminal device, the retransmitted data in the second time interval if it is determined that the quantity of symbols included in the second time interval is not less than the preset threshold.

According to a third aspect of the embodiments of the present invention, an uplink control channel transmission method is provided. The method is applied to a TDD system, and includes:
sending, by a network device, third downlink data in a first slot; and receiving, in a second slot, an uplink physical control channel used to bear reception status information of the third downlink data, where the uplink physical control channel is in an UpPTS included in a special subframe, and the UpPTS includes six symbols.

According to the uplink control channel transmission method provided in this embodiment of the present invention, feedback of some reception status information is borne by using the UpPTS. Using the UpPTS to bear the feedback of the some reception status information can effectively reduce a load amount in another uplink slot.

With reference to the third aspect, in a possible implementation, the second slot is a slot to which the UpPTS belongs, and a start location of the first slot and a start location of the slot to which the UpPTS belongs are spaced by at least k slots, where k is an integer greater than or equal to 1 and less than or equal to 8.

According to a fourth aspect of the embodiments of the present invention, an uplink control channel transmission method is provided. The method is applied to a TDD system, and includes:
receiving, by a terminal device, third downlink data in a first slot; and sending, in a second slot, an uplink physical control channel used to bear reception status information of the third downlink data, where the uplink physical control channel is in an UpPTS included in a special subframe, and the UpPTS includes six symbols.

According to the uplink control channel transmission method provided in this embodiment of the present invention, feedback of some reception status information is borne by using the UpPTS. In addition, using the UpPTS to bear the feedback of the some reception status information can effectively reduce a load amount in another uplink slot.

With reference to the fourth aspect, in a possible implementation, the second slot is a slot to which the UpPTS belongs, and a start location of the first slot and a start location of the slot to which the UpPTS belongs are spaced by at least k slots, where k is an integer greater than or equal to 1 and less than or equal to 8.

According to a fifth aspect of the embodiments of the present invention, a network device applied to a TDD system is provided. The network device may include:
a sending unit, configured to send second downlink data in a second time interval, where the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval includes N symbols, where N is an integer greater than or equal to 2 and less than or equal to 6.

With reference to the fifth aspect, in a possible implementation, the sending unit is further configured to send first downlink data in a first time interval that is in the first slot of the first special subframe.

With reference to the fifth aspect and the foregoing possible implementation, in another possible implementation, the sending unit is further configured to send second DCI including control information used to indicate transmission of the second downlink data, where the second DCI is in the first slot of the first special subframe, or the second DCI is in a slot that is before the second special subframe and is adjacent to the second special subframe.

With reference to the fifth aspect and the foregoing possible implementations, in another possible implementation, the sending unit is further configured to send first DCI including control information used to indicate transmission of the first downlink data, and the first DCI is in the first slot of the first special subframe.

With reference to the fifth aspect and the foregoing possible implementation, in another possible implementation, the second DCI sent by the sending unit further includes scheduling information used to indicate transmission of the first downlink data.

With reference to the fifth aspect and the foregoing possible implementations, in another possible implementation, the network device provided in this embodiment of the present invention may further include a receiving unit. The receiving unit is configured to receive reception status information of the second downlink data in an uplink slot n, where a start location of the uplink slot n and a start location of the second time interval are spaced by at least k-i slots, where k is an integer greater than or equal to 1 and less than or equal to 8, and i is a non-negative integer less than k.

With reference to the fifth aspect and the foregoing possible implementations, in another possible implementation, the network device provided in this embodiment of the present invention may further include a receiving unit. The receiving unit is configured to receive reception status information of the first downlink data in an uplink slot m, where a start location of the uplink slot m and a start location of the first time interval are spaced by at least k slots, where k is an integer greater than or equal to 1 and less than or equal to 8.

According to a sixth aspect of the embodiments of the present invention, a terminal device applied to a TDD system is provided. The terminal device includes:
a receiving unit, configured to receive second downlink data in a second time interval, where the second time interval is in the second slot of a first special subframe or the first slot of a second special subframe, the second time interval includes N symbols, where N is an integer greater than or equal to 2 and less than or equal to 6, the first special subframe is a special subframe of which downlink pilot timeslot duration is greater than 0.5 millisecond, and the second special subframe is a special subframe of which downlink pilot timeslot duration is less than 0.5 millisecond.

With reference to the sixth aspect, in a possible implementation, the receiving unit is further configured to receive first downlink data in a first time interval, where the first time interval is in the first slot of the first special subframe.

With reference to the sixth aspect and the foregoing possible implementations, in another possible implementation, the receiving unit is further configured to receive second DCI, where the second DCI includes control information used to indicate transmission of the second downlink data, and the second DCI is in the first slot of the first special subframe, or the second DCI is in a slot that is before the second special subframe and is adjacent to the second special subframe.

With reference to the sixth aspect and the foregoing possible implementations, in another possible implementation, the receiving unit is further configured to receive first DCI, where the first DCI includes control information used to indicate transmission of the first downlink data, and the first DCI is in the first slot of the first special subframe.

With reference to the sixth aspect and the foregoing possible implementation, in another possible implementation, the second DCI received by the receiving unit further includes scheduling information used to indicate transmission of the first downlink data.

With reference to the sixth aspect and the foregoing possible implementations, in another possible implementation, the terminal device provided in this embodiment of the present invention may further include a sending unit. The sending unit is configured to send reception status information of the second downlink data in an uplink slot n, where a start location of the uplink slot n and a start location of the second time interval are spaced by at least k-i slots, where k is an integer greater than or equal to 1 and less than or equal to 8, and i is a non-negative integer less than k.

With reference to the sixth aspect and the foregoing possible implementations, in another possible implementation, the terminal device provided in this embodiment of the present invention may further include a sending unit. The sending unit is further configured to send reception status information of the first downlink data in an uplink slot m, where a start location of the uplink slot m and a start location of the first time interval are spaced by at least k slots, where k is an integer greater than or equal to 1 and less than or equal to 8.

With reference to the sixth aspect and the foregoing possible implementations, in another possible implementation, when the terminal device needs to receive retransmitted data in the second time interval, the terminal device may further include a determining unit. The determining unit is configured to determine whether a quantity of symbols included in the second time interval is not less than a preset threshold. The receiving unit is further configured to receive the retransmitted data in the second time interval if the determining unit determines that the quantity of symbols included in the second time interval is not less than the preset threshold. The sending unit is further configured to: if the determining unit determines that the quantity of symbols included in the second time interval is less than the preset threshold, skip receiving, by the terminal device, the retransmitted data, and send reception status information of the retransmitted data in an uplink slot s, where the reception status information is negative acknowledgement NACK, a start location of the uplink slot s and the start location of the second time interval are spaced by at least k-i slots, where k is an integer greater than or equal to 1 and less than or equal to 8, and i is a non-negative integer less than k.

According to a seventh aspect of the embodiments of the present invention, a network device applied to a TDD system is provided. The network device includes:
a sending unit, configured to send third downlink data in a first slot; and a receiving unit, configured to receive an uplink physical control channel in a second slot, where the uplink physical control channel is used to bear reception status information of the third downlink data, the uplink physical control channel is in an UpPTS included in a special subframe, and the UpPTS includes six symbols.

With reference to the seventh aspect, in a possible implementation, the second slot is a slot to which the UpPTS belongs, and a start location of the first slot and a start location of the slot to which the UpPTS belongs are spaced by at least k slots, where k is an integer greater than or equal to 1 and less than or equal to 8.

According to an eighth aspect of the embodiments of the present invention, a terminal device applied to a TDD system is provided. The terminal device includes:
a receiving unit, configured to receive third downlink data in a first slot; and a sending unit, configured to send an uplink physical control channel in a second slot, where the uplink physical control channel is used to bear reception status information of the third downlink data, the uplink physical control channel is in an UpPTS included in a special subframe, and the UpPTS includes six symbols.

With reference to the eighth aspect, in a possible implementation, the second slot is a slot to which the UpPTS belongs, and a start location of the first slot and a start location of the slot to which the UpPTS belongs are spaced by at least k slots, where k is an integer greater than or equal to 1 and less than or equal to 8.

According to a ninth aspect of the embodiments of the present invention, a network device applied to a TDD system is provided. The network device may include a processor, a memory, and a transceiver.

The memory is configured to store a computer executable instruction, and when the network device runs, the processor executes the computer executable instruction stored in the memory, to enable the terminal device to perform the data transmission method according to the first aspect or any possible implementation of the first aspect or perform the uplink control channel transmission method according to the third aspect or any possible implementation of the third aspect.

According to a tenth aspect of the embodiments of the present invention, a terminal device applied to a TDD system is provided. The terminal device may include a processor, a memory, and a transceiver.

The memory is configured to store a computer executable instruction, and when the terminal device runs, the processor executes the computer executable instruction stored in the memory, to enable the terminal device to perform the data transmission method according to the second aspect or any possible implementation of the second aspect or perform the uplink control channel transmission method according to the fourth aspect or any possible implementation of the fourth aspect.

According to an eleventh aspect of the embodiments of the present invention, a frame structure applied to a TDD system is provided. The TDD system uses an sTTI to transmit data. The frame structure may include:
at least one uplink subframe, at least one downlink subframe, and at least one special subframe, where the special subframe includes a DwPTS, a GP, and an UpPTS, duration of each of the uplink subframe, the downlink subframe, and the special subframe is one millisecond.

When duration of the DwPTS is greater than 0.5 millisecond, the special subframe is a first special subframe, a second time interval is in the second slot of the first special subframe. When duration of the DwPTS is less than 0.5 millisecond, the special subframe is a second special subframe, a second time interval is in the first slot of the second special subframe. The second time interval is used to send second downlink data. The second time interval includes N symbols, where N is an integer greater than or equal to 2 and less than or equal to 6.

Specifically, when a normal CP is used in the TDD system, the second time interval includes N symbols, where N is an integer greater than or equal to 2 and less than or equal to 5. When an extended CP is used in the TDD system, the second time interval includes M symbols, where M is an integer greater than or equal to 2 and less than or equal to 5.

According to the frame structure provided in this embodiment of the present invention, the second downlink data may be sent in the second time interval, where the second time interval is in the second slot of the first special subframe or the first slot of the second special subframe. In this way, all symbols in a DwPTS included in a special subframe can be effectively used to transmit downlink data, thereby avoiding a waste of transmission resources.

With reference to the eleventh aspect, in a possible implementation, when the special subframe is the first special subframe, the first time interval is in the first slot of the first special subframe, and the first time interval is used to send first downlink data.

When the normal CP is used in the TDD system, the first time interval includes seven symbols. When the extended CP is used in the TDD system, the first time interval includes six symbols.

The first time interval is further configured to send first downlink control information DCI and second DCI. The first DCI includes scheduling information used to schedule the first downlink data, and the second DCI includes scheduling information used to schedule the second downlink data.

With reference to the eleventh aspect and the foregoing possible implementation, in another possible implementation, to increase an amount of data borne in the second time interval, the first slot of the first special subframe or a slot that is before the second special subframe and is adjacent to the second special subframe is used to send the second DCI, where the second DCI includes control information used to indicate transmission of the second downlink data.

With reference to the eleventh aspect and the foregoing possible implementations, in another possible implementation, the first slot of the first special subframe is used to send the first DCI, where the first DCI includes control information used to indicate transmission of the first downlink data.

With reference to the eleventh aspect and the foregoing possible implementation, in another possible implementation, the second DCI further includes scheduling information used to indicate transmission of the first downlink data.

With reference to the eleventh aspect and the foregoing possible implementations, in another possible implementation, for an uplink slot q, if the uplink slot q is used to feed back reception status information of the first downlink data sent in the first time interval, the first time interval is in a slot q-k or before a slot q-k; or if the slot q is used to feed back reception status information of the second downlink data sent in the second time interval, the second time interval is in a slot q-k+i or before a slot q-k+i, where k is an integer greater than or equal to 1 and less than or equal to 8, and i is a non-negative integer less than k.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a frame structure in the prior art;
FIG. 2 is a schematic structural diagram of a special subframe in the prior art;
FIG. 3 is a schematic diagram of a frame structure according to an embodiment of the present invention;
FIG. 4 is a schematic diagram of another frame structure according to an embodiment of the present invention;
FIG. 5 is a schematic diagram of another frame structure according to an embodiment of the present invention;
FIG. 6 is a schematic diagram of another frame structure according to an embodiment of the present invention;
FIG. 7 is a schematic diagram of another frame structure according to an embodiment of the present invention;
FIG. 8 is a schematic diagram of another frame structure according to an embodiment of the present invention;
FIG. 9 is a schematic diagram of another frame structure according to an embodiment of the present invention;
FIG. 10 is a schematic diagram of another frame structure according to an embodiment of the present invention;
FIG. 11 is a schematic diagram of another frame structure according to an embodiment of the present invention;
FIG. 12 is a schematic diagram of another frame structure according to an embodiment of the present invention;
FIG. 13 is a simplified schematic diagram of a wireless communications system applying the embodiments of the present invention according to an embodiment of the present invention;
FIG. 14 is a schematic composition diagram of a network device according to an embodiment of the present invention;
FIG. 15 is a schematic composition diagram of a terminal device according to an embodiment of the present invention;
FIG. 16 is a flowchart of a data transmission method according to an embodiment of the present invention;
FIG. 17 is a schematic diagram of another frame structure according to an embodiment of the present invention;
FIG. 18 is a schematic diagram of another frame structure according to an embodiment of the present invention;
FIG. 19 is a schematic diagram of another frame structure according to an embodiment of the present invention;
FIG. 20 is a schematic diagram of another frame structure according to an embodiment of the present invention;
FIG. 20A is a schematic diagram of another frame structure according to an embodiment of the present invention;
FIG. 21 is a schematic diagram of a subframe configuration according to an embodiment of the present invention;
FIG. 22 is a schematic diagram of feeding back reception status information of downlink data according to an embodiment of the present invention;
FIG. 23A is a schematic structural diagram of a special subframe according to an embodiment of the present invention;

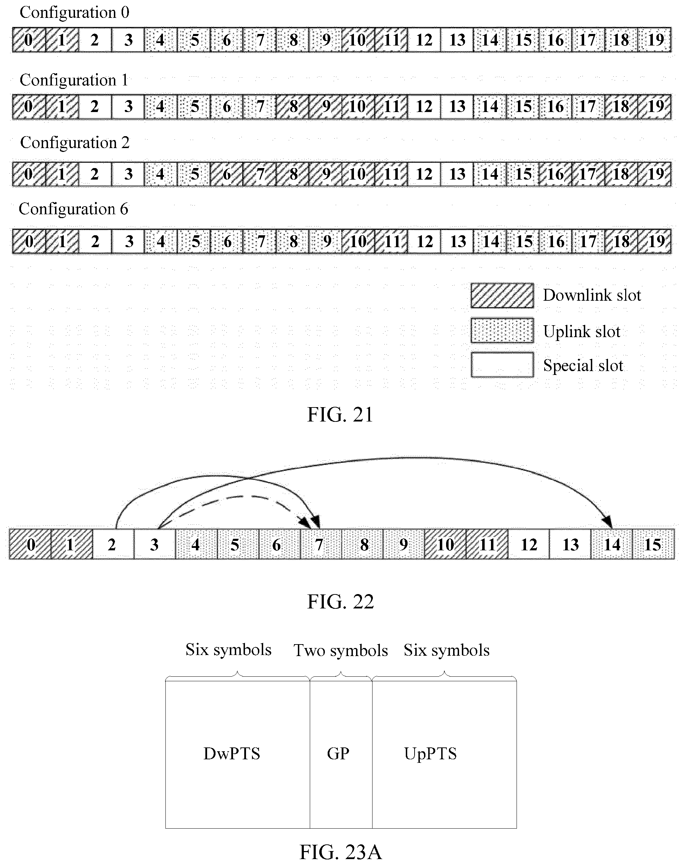

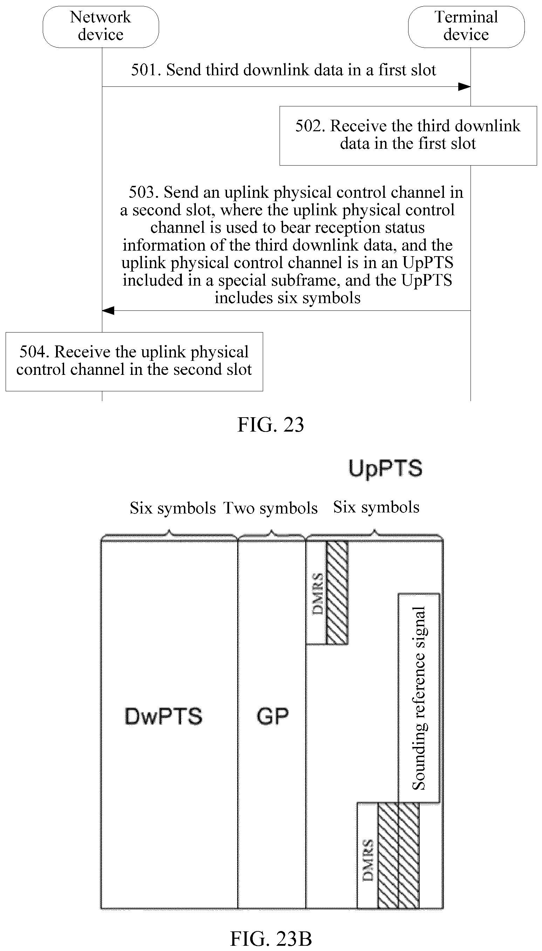

FIG. 23 is a flowchart of an uplink control channel transmission method according to an embodiment of the present invention;
FIG. 23B is a schematic structural diagram of an uplink physical control channel according to an embodiment of the present invention;

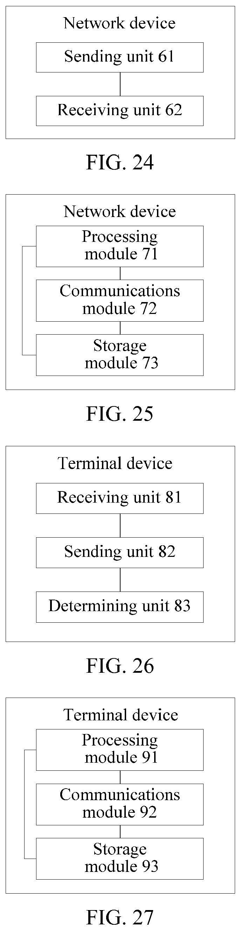

FIG. 24 is a schematic composition diagram of another network device according to an embodiment of the present invention;
FIG. 25 is a schematic composition diagram of another network device according to an embodiment of the present invention;
FIG. 26 is a schematic composition diagram of another terminal device according to an embodiment of the present invention; and
FIG. 27 is a schematic composition diagram of another terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

To avoid a waste of transmission resources, the present invention provides a data transmission method. A specific solution thereof is: sending, by a network device, second downlink data in a second time interval, where the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval includes N symbols, where N is an integer greater than or equal to 2 and less than or equal to 6. The second downlink data is sent by using the second time interval that is in the second slot of the first special subframe or the first slot of the second special subframe, to transmit downlink data by effectively using all symbols in a DwPTS included in a special subframe, thereby avoiding a waste of transmission resources.

For convenience of understanding by a person skilled in the art, basic terms used in the embodiments of the present invention are described herein.
(1) Subframe n-a and subframe n+a: In an LTE system, each radio frame includes ten 1 ms subframes. The ten subframes are numbered from 0 to 9, which are specifically a subframe 0, a subframe 1, a subframe 2, a subframe 3, a subframe 4, a subframe 5, a subframe 6, a subframe 7, a subframe 8, and a subframe 9.

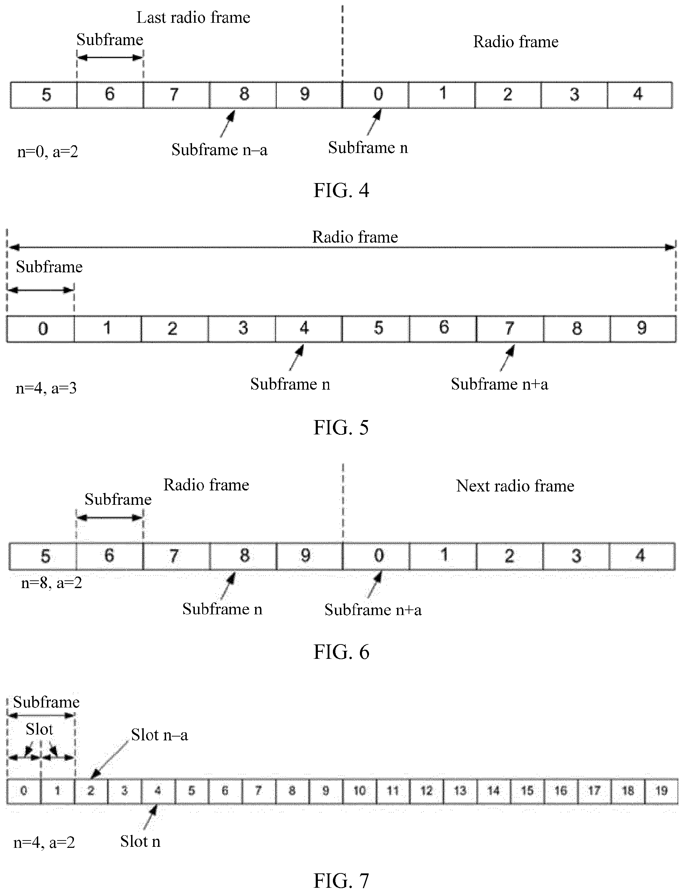

The subframe n-a is an a^{th} subframe located before a subframe n. In other words, the subframe n-a is the a^{th} subframe counted forward from the subframe n. For example, as shown in FIG. 3, if n=4 and a=2, the subframe n-a is a subframe 2 in a radio frame in which the subframe 4 is located. For another example, as shown in FIG. 4, if n=0 and a=2, the subframe n-a is a subframe 8 in a last radio frame of a radio frame in which the subframe 0 is located.

The subframe n+a is an a^{th} subframe located after the subframe n. In other words, the subframe n+a is the a^{th} subframe counted backward from the subframe n. For example, as shown in FIG. 5, if n=4 and a=3, the subframe n+a is a subframe 7 in a radio frame in which the subframe 4 is located. For another example, as shown in FIG. 6, if n=8 and a=2, the subframe n+a is a subframe 0 in a next radio frame of a radio frame in which the subframe 8 is located.

(2) Slot n-a and slot n+a: In the LTE system, each subframe includes two slots (slot) each having duration of 0.5 ms. That is, each radio frame includes 20 slots. The 20 slots are numbered from 0 to 19, which are specifically a slot 0, a slot 1, a slot 2, a slot 3, a slot 4, a slot 5, a slot 6, a slot 7, a slot 8, a slot 9, a slot 10, a slot 11, a slot 12, a slot 13, a slot 14, a slot 15, a slot 16, a slot 17, a slot 18, and a slot 19.

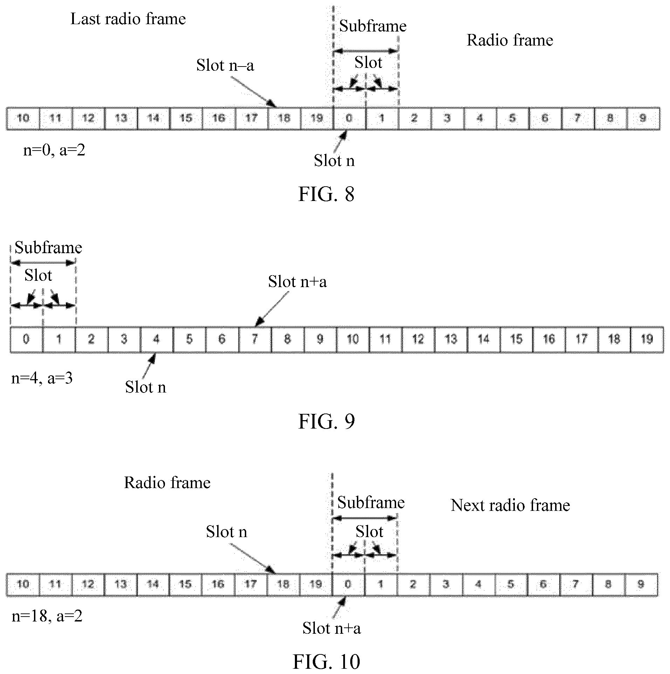

The slot n-a is an a^{th} slot located before a slot n. In other words, the slot n-a is the a^{th} slot counted forward from the slot n. For example, as shown in FIG. 7, if n=4 and a=2, the slot n-a is a slot 2 in a radio frame in which the slot 4 is located. For another example, as shown in FIG. 8, if n=0 and a=2, the slot n-a is a slot 18 in a last radio frame of a radio frame in which the slot 0 is located.

The slot n+a is an a^{th} slot located after the slot n. In other words, the slot n+a is the a^{th} slot counted backward from the slot n. For example, as shown in FIG. 9, if n=4 and a=3, the slot n+a is a slot 7 in a radio frame in which the slot 4 is located. For another example, as shown in FIG. 10, if n=18 and a=2, the slot n+a is a slot 0 in a next radio frame of a radio frame in which the slot 18 is located.

(3) Symbol: In the embodiments of the present invention, both an uplink symbol and a downlink symbol are briefly referred to as a symbol.

The uplink symbol is referred to as a single carrier frequency division multiple access (single carrier-frequency division multiple access, SC-FDMA) symbol, and the downlink symbol is referred to as an orthogonal frequency division multiple access (orthogonal frequency division multiplexing, OFDM) symbol. It should be noted that if an uplink orthogonal frequency division multiple access (Orthogonal Frequency Division Multiple Access, OFDMA) mode is used, the uplink symbol may also be referred to as another type of symbol, for example, an OFDM symbol. The embodiments of the present invention impose no specific limitation on the uplink multiple access mode and a downlink multiple access mode.

In a TDD system, a quantity of symbols included in each slot is related to a length of a CP used in the TDD system. If the CP is a normal CP, each slot includes seven symbols, and each subframe includes 14 symbols. For example, each subframe includes symbols having sequence numbers of #0, #1, #2, #3, #4, #5, #6, #7, #8, #9, #10, #11, #12, and #13 respectively. If the CP is an extended CP, each slot includes six symbols, and each subframe includes 12 symbols. For example, each subframe includes symbols having sequence numbers of #0, #1, #2, #3, #4, #5, #6, #7, #8, #9, #10, and #11 respectively.

(4) Hybrid automatic repeat request (Hybrid Automatic Repeat Request, HARQ) time sequence: The HARQ time sequence is a transmission time sequence of downlink data transmission and a hybrid automatic repeat request acknowledgement (HARQ acknowledgement, HARQ-ACK) feedback of a terminal device.

It should be noted that the embodiments of the present invention are applied to the TDD system, and an sTTI is used in the TDD system for data transmission. A frame structure in the TDD system includes at least one uplink subframe, at least one downlink subframe, and at least one special subframe. The special subframe includes a DwPTS, a GP, and an UpPTS, and duration of each of the uplink subframe, the downlink subframe, and the special subframe is one millisecond. When duration of the DwPTS is greater than 0.5 millisecond, the special subframe including the DwPTS may be referred to as a first special subframe. When duration of the DwPTS is less than 0.5 millisecond, the special subframe including the DwPTS may be referred to as a second special subframe. A first time interval used in the embodiments of the present invention is in the first slot of the first special subframe, and the second time interval is in the second slot of the first special subframe or the first slot of a second special subframe. That is, when the duration of the DwPTS included in the special subframe is greater than 0.5 millisecond, the special subframe includes one first time interval and one second time interval. When the duration of the DwPTS included in the special subframe is less than 0.5 millisecond, the special subframe includes one second time interval, and includes no first time interval. In the embodiments of the present invention, the frame structure is used for data transmission.

When a normal CP is used in the TDD system, the first time interval includes seven symbols, and the second time interval includes N symbols, where N is an integer greater than or equal to 2 and less than or equal to 6. When an extended CP is used in the TDD system, the first time interval includes six symbols, and the second time interval includes M symbols, where M is an integer greater than or equal to 2 and less than or equal to 5.

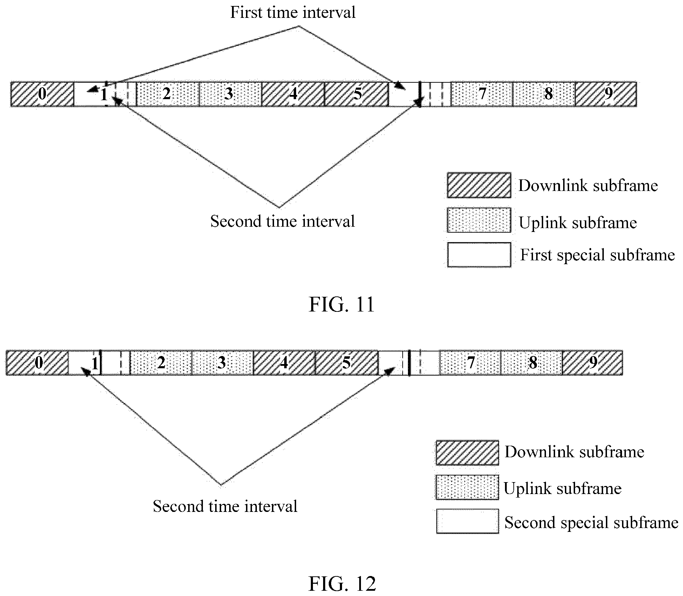

For example, a frame structure shown in FIG. 11 includes four uplink subframes, four downlink subframes, and two special subframes, and duration of a DwPTS included in the special subframe is greater than 0.5 millisecond. For each of the two special subframes, the first time interval is in the first slot of the special subframe, and the second time interval is in the second slot of the special subframe. For example, a frame structure shown in FIG. 12 includes four uplink subframes, four downlink subframes, and two special subframes, and duration of a DwPTS included in the special subframe is less than 0.5 millisecond. For each of the two special subframes, the second time interval is in the first slot of the special subframe, and the special subframe includes no first time interval.

Implementations of the embodiments of the present invention are described in detail below with reference to the accompanying drawings.

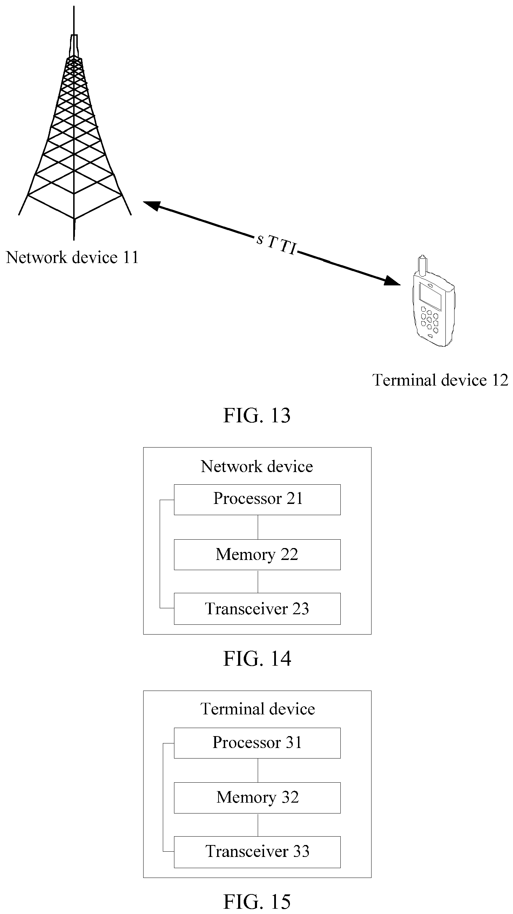

FIG. 13 is a simplified schematic diagram of a wireless communications system that can apply the embodiments of the present invention. The wireless communications system may include a network device 11 and a terminal device 12.

The wireless communications system supports TDD, for example, 4.5G or 5G communication. The network device 11 and the terminal device 12 transmit data by using an sTTI.

The network device 11 may be a base station (Base Station, BS), a base station controller, or the like for wireless communication. The network device 11 is an apparatus deployed in a radio access network to provide a wireless communication function for the terminal device 12. Main functions of the network device 11 include radio resource management, Internet Protocol (Internet Protocol, IP) header compression and user data stream encryption, selection of a mobile management entity (Mobile Management Entity, MME) during attachment of the terminal device 12, routing of user plane data to a serving gateway (Service Gateway, SGW), organization and sending of a paging message, organization and sending of a broadcast message, mobility-oriented or scheduling-oriented measurement, configuration of a measurement report, and the like. The network device 11 may include various forms of macro base stations, micro base stations, relay stations, access points, and the like. In systems using different wireless access technologies, a device having a base station function may be named differently. For example, the device is referred to as an evolved NodeB (evolved NodeB, eNB or eNodeB) in an LTE system, referred to as a NodeB (NodeB) in a 3rd generation mobile telecommunications (The 3rd Generation Telecommunication, 3G) system, and so on. As communications technologies evolve, the name "base station" may change. In addition, in another possible situation, the network device 11 may be another apparatus providing a wireless communication function for the terminal device 12. For convenience of description, in the embodiments of the present invention, the apparatus providing the wireless communication function for the terminal device 12 is referred to as the network device 11.

The terminal device 12 may include various handheld devices (such as mobile phones, smart terminals, multimedia devices, or stream media devices), in-vehicle devices, wearable devices, and computing devices having a wireless communication function, or other processing devices connected to a wireless modem, and various forms of user equipments (User Equipment, UE), mobile stations (Mobile Station, MS), terminal devices (terminal device), and the like. For convenience of description, the devices mentioned above are collectively referred to as the terminal device 12.

FIG. 14 is a schematic composition diagram of a network device according to an embodiment of the present invention. As shown in FIG. 14, the network device may include a processor 21, a memory 22, and a transceiver 23.

The following specifically describes the components of the network device with reference to FIG. 14.

The processor 21 may be one processor, or may be a generic name of a plurality of processing elements. For example, the processor 21 may be a general-purpose central processing unit (central processing unit, CPU), an application-specific integrated circuit (application-specific integrated circuit, ASIC), or one or more integrated circuits configured to control program execution of a solution in the present invention, for example, one or more microprocessors (digital signal processor, DSP) or one or more field programmable gate arrays (field programmable gate array, FPGA). The processor 21 may perform various functions of the terminal by running or executing a software program stored in the memory 22 and invoking data stored in the memory 22.

During specific implementation, in an embodiment, the processor 21 may include one or more CPUs, for example, a CPU 0 and a CPU 1.

During specific implementation, in an embodiment, the network device may include a plurality of processors. Each of these processors may be a single-core (single-CPU) processor, or may be a multi-core (multi-CPU) processor. Herein, the processor may be one or more devices, circuits, and/or processing cores configured to process data (for example, a computer program instruction).

The memory 22 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, optical disc storage medium (including a compact disc, a laser disc, an optical disc, a digital versatile disc, a Blu-ray disc, or the like) and magnetic disk storage medium, another magnetic storage device, or any other medium that can be configured to carry or store expected program code in a form of an instruction or a data structure and that is accessible by a computer, but is not limited thereto. The memory may independently exist and be connected to the processor by using a bus. Alternatively, the memory may be integrated with the processor.

The memory 22 is configured to store application program code for executing the solution in the present invention, and the application program code is controlled and executed by the processor 21. The processor 21 is configured to execute the application program code stored in the memory 22.

The transceiver 23 is configured to communicate with another device or a communications network such as an Ethernet, a radio access network (radio access network, RAN), or a wireless local area network (wireless local area network, WLAN). In this embodiment of the present invention, the transceiver 23 may include all or a part of a baseband processor, and may optionally include a radio frequency (Radio Frequency, RF) processor. The RF processor is configured to receive and send an RF signal. The baseband processor is configured to process a baseband signal converted from an RF signal or a baseband signal to be converted into an RF signal.

FIG. 15 is a schematic composition diagram of a terminal device according to an embodiment of the present invention. As shown in FIG. 15, the terminal device may include a processor 31, a memory 32, and a transceiver 33.

The following specifically describes the components of the terminal device with reference to FIG. 15.

The processor 31 may be one processor, or may be a generic name of a plurality of processing elements. For example, the processor 31 may be a general-purpose CPU, an ASIC, or one or more integrated circuits configured to control program execution of a solution in the present invention, for example, one or more DSPs or one or more FPGAs. The processor 31 may perform various functions of the terminal by running or executing a software program stored in the memory 32 and invoking data stored in the memory 32.

During specific implementation, in an embodiment, the processor 31 may include one or more CPUs, for example, a CPU 0 and a CPU 1.

During specific implementation, in an embodiment, the terminal device may include a plurality of processors. Each of these processors may be a single-CPU processor, or may be a multi-CPU processor. Herein, the processor may be one or more devices, circuits, and/or processing cores configured to process data (for example, a computer program instruction).

The memory 32 may be a ROM or another type of static storage device that can store static information and a static instruction; or a RAM or another type of dynamic storage device that can store information and an instruction; or may be an EEPROM, a CD-ROM or another compact-disc storage medium, optical disc storage medium (including a compact disc, a laser disk, an optical disc, a digital versatile disc, a Blu-ray disc, or the like) and magnetic disk storage medium, another magnetic storage device, or any other medium that can be configured to carry or store expected program code in a form of an instruction or a data structure and that is accessible by a computer, but is not limited thereto. The memory may independently exist and be connected to the processor by using a bus. Alternatively, the memory may be integrated with the processor.

The transceiver 33 is configured to communicate with another device or a communications network such as an Ethernet, a RAN, or a WLAN. The transceiver 33 may include a receiving unit to implement a receiving function and a sending unit to implement a sending function.

The terminal device is not limited to the device structure shown in FIG. 15. More or fewer components than those shown in the figure may be included, some components may be combined, or different component arrangements may be used. Although not shown, the terminal device may further include a battery, a camera, a Bluetooth module, a GPS module, a display screen, and the like. Details are not further provided herein.

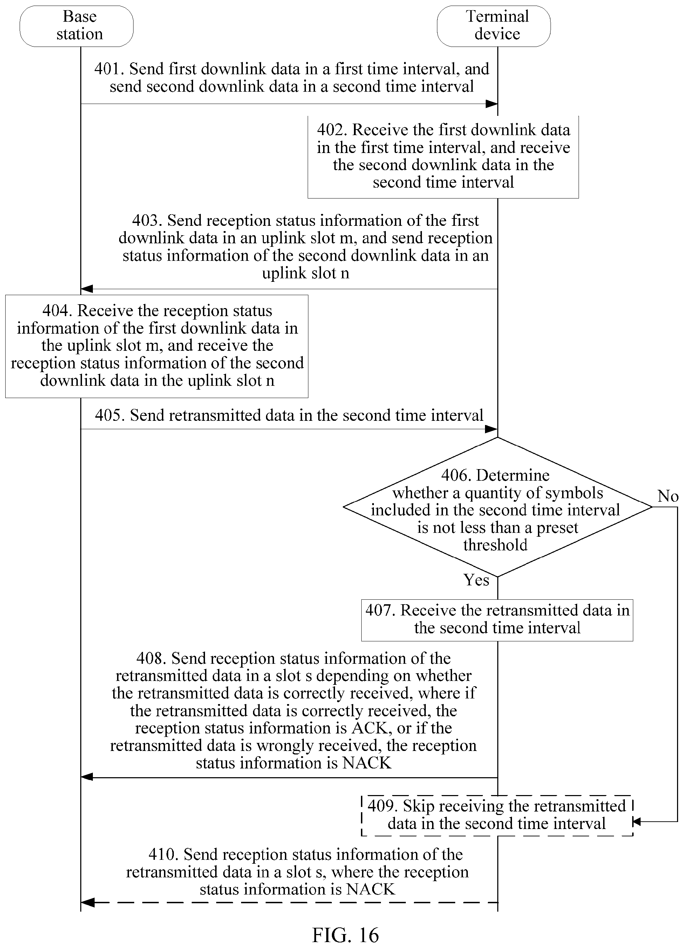

FIG. 16 is a flowchart of a data transmission method according to an embodiment of the present invention. As shown in FIG. 16, the method may include the following steps.

It should be noted that in this embodiment of the present invention, that a network device is a base station is used as an example to describe a specific implementation process of the present invention.

401. A base station sends first downlink data in a first time interval, and sends second downlink data in a second time interval.

When the base station needs to send downlink data, the base station may add, in the first time interval, the first downlink data to a shortened physical downlink shared channel (shortened Physical Downlink Shared Channel, sPDSCH) for sending, and may add, in the second time interval, the second downlink data to the sPDSCH for sending.

For at least one special subframe included in a system frame, for example, assuming that a normal CP is used in a TDD system, configurations of the special subframe are shown in Table 1. It may be understood that, as shown in Table 1, for configurations other than #0, #5, and #9, a DwPTS included in each special subframe is greater than 0.5 millisecond. Therefore, in the other configurations than #0, #5, and #9, for each special subframe, the first time interval is in the first slot of the special subframe, and the second time interval is in the second slot of the special subframe. That is, the DwPTS included in each special subframe includes one first time interval and one second time interval. For example, for a configuration #1, in a DwPTS included each special subframe, the first time interval includes symbols having sequence numbers of #0, #1, #2, #3, #4, #5, and #6, and the second time interval includes symbols having sequence numbers of #7 and #8. In addition, as shown in Table 1, in the configurations #0, #5, and #9, a DwPTS included in each special subframe is less than 0.5 millisecond. Therefore, in the configurations #0, #5, and #9, for each special subframe, the second time interval is in the first slot of the special subframe. That is, the DwPTS included in each special subframe includes only one second time interval. For example, for the configuration #5, in the DwPTS included in each special subframe, the second time interval includes symbols having sequence numbers of #0, #1, and #2.

For example, assuming that an extended CP is used in the TDD system, configurations of the special subframe are shown in Table 2.

**Table 2**

| Special subframe configuration | 0 | 1 | 2 | 3 | 4 | 5 | 6 | 7 |
|---|---|---|---|---|---|---|---|---|
| DwPTS | 3 | 8 | 9 | 10 | 3 | 8 | 9 | 5 |
| UpPTS | 1 | | | | 2 | | | |

It may be understood that, as shown in Table 2, for configurations other than #0, #4, and #7, a DwPTS included in each special subframe is greater than 0.5 millisecond. Therefore, in the other configurations than #0, #4, and #7, for each special subframe, the first time interval is in the first slot of the special subframe, and the second time interval is in the second slot of the special subframe. That is, the DwPTS included in each special subframe includes one first time interval and one second time interval. For example, for a configuration #1, in a DwPTS included each special subframe, the first time interval includes symbols having sequence numbers of #0, #1, #2, #3, #4, and #5, and the second time interval includes symbols having sequence numbers of #6 and #7. In addition, as shown in Table 2, in the configurations #0, #4, and #7, a DwPTS included in each special subframe is less than 0.5 millisecond. Therefore, in the configurations #0, #4, and #7, for each special subframe, the second time interval is in the first slot of the special subframe. That is, the DwPTS included in each special subframe includes only one second time interval. For example, for the configuration #4, in the DwPTS included in each special subframe, the second time interval includes symbols having sequence numbers of #0, #1, and #2.

Further, to enable a terminal device to accurately receive the downlink data sent by the base station, before sending the downlink data, the base station needs to send, to the terminal device, control information used to indicate transmission of the downlink data, namely, DCI.

In a first manner in this embodiment of the present invention, first DCI includes control information used to indicate transmission of the first downlink data, and second DCI includes control information used to indicate transmission of the second downlink data.

Specifically, for the first DCI, the base station may add, in the first slot of a first special subframe, the first DCI to a shortened physical downlink control channel (shortened Physical Downlink Control Channel, sPDCCH) for sending.

For the second DCI, the base station may add, in the first slot of the first special subframe or in a slot that is before a second special subframe and is adjacent to the second special subframe, the second DCI to the sPDCCH for sending. Certainly, the base station may alternatively add, in the second slot of the first special subframe or the first slot of a second special subframe, the second DCI to the sPDCCH for sending.

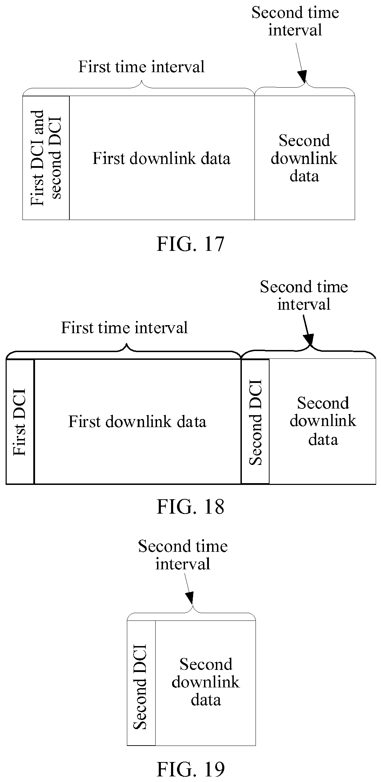

That is, when the DwPTS included in the special subframe is greater than 0.5 millisecond, in a first possible implementation, as shown in FIG. 17, the base station may add, in the first time interval, the first DCI and the second DCI to the sPDCCH for sending. In a second possible implementation, as shown in FIG. 18, the base station may add, in the first time interval, the first DCI to the sPDCCH for sending, and add, in the second time interval, the second DCI to the sPDCCH for sending.

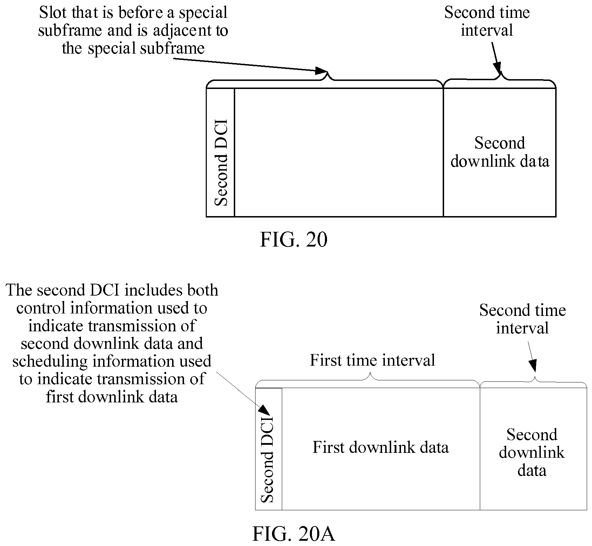

When the DwPTS included in the special subframe is less than 0.5 millisecond, in a first possible implementation, as shown in FIG. 19, the base station may add, in the second time interval, the second DCI to the sPDCCH for sending. In a second possible implementation, as shown in FIG. 20, the base station may add, in a slot that is before the special subframe and is adjacent to the special subframe, the second DCI to the sPDCCH for sending.

For example, the first DCI may include at least one of the following: frequency resource information required for receiving the first downlink data, a transmission format of the first downlink data, and the like. The second DCI may include at least one of the following: frequency resource information required for receiving the second downlink data, a transmission format of the second downlink data, and the like.

Certainly, when the first DCI and the second DCI are both borne in the first time interval, the terminal device may be explicitly informed, by using the first DCI and the second DCI, that the first DCI and the second DCI are respectively control information used to indicate transmission of which downlink data. That is, the first DCI and the second DCI each include one-bit information, to indicate whether the DCI indicates data transmission in the first time interval or in the second time interval. Alternatively, the terminal device may be implicitly informed, by using the first DCI and the second DCI, that the first DCI and the second DCI are respectively control information used to indicate transmission of which downlink data.

Alternatively, in a second manner in this embodiment of the present invention, second DCI includes both control information used to indicate transmission of the second downlink data and scheduling information used to indicate transmission of the first downlink data. That is, one piece of DCI is used to bear both the control information for the transmission of the second downlink data and the scheduling information for the transmission of the first downlink data. For example, as shown in FIG. 20A, the base station may add, in the first time interval, the second DCI to a sPDCCH for sending. The second DCI includes both control information used to indicate transmission of the second downlink data and scheduling information used to indicate transmission of the first downlink data.

It should be noted that because the first time interval and the second time interval occupy different time domain resources, the first downlink data and the second downlink data may be encoded at different code rates, to implement data transmission in time intervals having different time domain resource lengths.

402. A terminal device receives the first downlink data in the first time interval, and receives the second downlink data in the second time interval.

The terminal device may receive, in the first time interval, the first downlink data borne on the sPDSCH, and receive, in the second time interval, the second downlink data borne on the sPDSCH.

Further, before receiving the downlink data, the terminal device needs to first receive the control information used to indicate the transmission of the downlink data, namely, the DCI. Specifically, when the base station sends the DCI in the first manner in step 401, for the first DCI, the terminal device may receive, in the first slot of the first special subframe, the first DCI borne on the sPDCCH. For the second DCI, the terminal device may receive, in the first slot of the first special subframe or in the slot that is before the second special subframe and is adjacent to the second special subframe, the second DCI borne on the sPDCCH, or may receive, in the second slot of the first special subframe or the first slot of the second special subframe, the second DCI borne on the sPDCCH. When the base station sends the DCI in the second manner in step 401, the terminal device may receive the second DCI borne on the sPDCCH. The second DCI includes both the control information used to indicate the transmission of the second downlink data and the scheduling information used to indicate the transmission of the first downlink data.

Due to introduction of an sTTI, an existing uplink and downlink subframe configuration has been changed. Therefore, an HARQ time sequence in an existing TDD system cannot be normally used in a TDD system into which the sTTI has been introduced. For example, in the existing TDD system, a subframe n is a downlink subframe, and a subframe n+4 is an uplink subframe. Therefore, the HARQ time sequence in the existing TDD system is defined as: A terminal device feeds back, in the subframe n+4, reception status information, that is, HARQ-ACK, of downlink data sent in the subframe n. However, after the sTTI is introduced, when a slot n is a downlink slot, a slot n+4 may still be a downlink slot. Therefore, in this case, the slot n+4 cannot be used to feed back the reception status information of the downlink data sent in the slot n. Therefore, the HARQ time sequence is redefined in this embodiment of the present invention, so that the HARQ time sequence applies to the TDD system into which the sTTI has been introduced. Through redefinition of the HARQ time sequence, each slot used to transmit the downlink data has a unique uplink slot corresponding to the slot. The reception status information includes at least two of the following: acknowledgement (acknowledgement, ACK), negative acknowledgement (negative acknowledgement, NACK), and discrete transmission (discrete transmission, DTX).

Specifically, the redefined HARQ time sequence is: For an uplink slot n, if the uplink slot n is used to feed back reception status information of the first downlink data sent in the first time interval, the first time interval is in a slot n-k or before a slot n-k; or if the slot n is used to feed back reception status information of the second downlink data sent in the second time interval, the second time interval is in a slot n-k+i or before a slot n-k+i, where k is an integer greater than or equal to 1 and less than or equal to 8, and i is a non-negative integer less than k.

For example, in a subframe configuration shown in FIG. 21, when K=5 and i=1, according to the redefined HARQ time sequence, HARQ time sequences in cases of different subframe configurations are shown in Table 3.

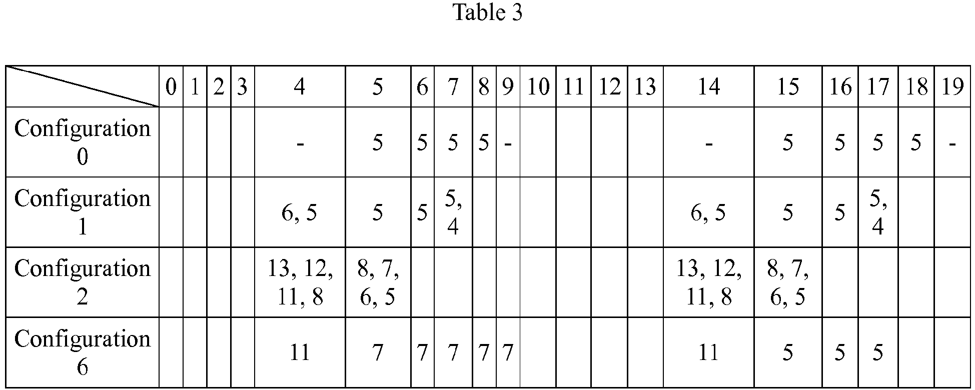

The first row represents slots in a radio frame. The slots include an uplink slot, a downlink slot, and a special slot. The first column represents a subframe configuration in the TDD system. A_{x,y} represents that in a configuration y, a slot x is used to feed back reception status information of downlink data sent in a slot x-A_{x,y}.

For example, in a configuration 0, all of a slot 0, a slot 1, a slot 10, and a slot 11 are downlink slots, all of a slot 2, a slot 3, a slot 12, and a slot 13 are special slots, and all of a slot 4, a slot 5, a slot 6, a slot 7, a slot 8, a slot 9, a slot 14, a slot 15, a slot 16, a slot 17, a slot 18, and a slot 19 are uplink slots. The slot 4, the slot 9, the slot 14, and the slot 19 are not used to feed back reception status information of downlink data, the slot 5 is used to feed back reception status information of downlink data sent in the slot 0 in a current radio frame, the slot 6 is used to feed back reception status information of downlink data sent in the slot 1 in the current radio frame, the slot 7 is used to feed back reception status information of downlink data sent in the slot 2 in the current radio frame, the slot 8 is used to feed back reception status information of downlink data sent in the slot 3 in the current radio frame, the slot 15 is used to feed back reception status information of downlink data sent in the slot 10 in the current radio frame, the slot 16 is used to feed back reception status information of downlink data sent in the slot 11 in the current radio frame, the slot 17 is used to feed back reception status information of downlink data sent in the slot 12 in the current radio frame, and the slot 18 is used to feed back reception status information of downlink data sent in the slot 13 in the current radio frame. Other configurations are similar to the configuration 0, and are not detailed in this embodiment of the present invention.

In addition, in the HARQ time sequence redefined in this embodiment of the present invention, different shortest time sequences are configured for time intervals occupying different time domain resources. To be specific, a shortest time sequence of the first time interval is k, a shortest time sequence of the second time interval is k-i. In this way, a feedback latency can be reduced. As shown in FIG. 22, for example, when k=5, in the subframe configuration 1 shown in FIG. 21, if the HARQ time sequence in the existing TDD system is used, an uplink slot 7 can bear the reception status information of the downlink data sent in the slot 2, but cannot bear the reception status information of the downlink data sent in the slot 3. The reception status information of the downlink data sent in the slot 3 may be fed back by using an uplink slot 14. This causes a relatively large latency. If the HARQ time sequence redefined in this embodiment of the present invention is used, assuming that i=1, the uplink slot 7 may be used to bear the reception status information of the downlink data sent in the slot 3. In this way, a feedback latency is reduced.

403. The terminal device sends reception status information of the first downlink data in an uplink slot m, and sends reception status information of the second downlink data in an uplink slot n.

A start location of the uplink slot m and a start location of the first time interval are spaced by at least k slots, and a start location of the uplink slot n and a start location of the second time interval are spaced by at least k-i slots, where k is an integer greater than or equal to 1 and less than or equal to 8, and i is a non-negative integer less than k. According to the redefined HARQ time sequence, the terminal device may feed back the reception status information of the first downlink data and the reception status information of the second downlink data in an uplink slot. The terminal device may feed back the reception status information of the first downlink data in the uplink slot m whose start location is at a distance of at least k slots from the start location of the first time interval, and may feed back the reception status information of the second downlink data in the slot m whose start location is at a distance of at least k-i slots from the start location of the second time interval.

For example, according to the configuration 1 in FIG. 21, it is assumed that the terminal device receives the first downlink data in the slot 2, and receives the second downlink data in the slot 3. In this case, according to the redefined HARQ slot, the terminal device may send the reception status information of the first downlink data and the reception status information of the second downlink data in the slot 7.

404. The base station receives the reception status information of the first downlink data in the uplink slot m, and receives the reception status information of the second downlink data in the uplink slot n.

For the NACK or the DTX fed back by the terminal device and received by the base station, the base station needs to retransmit corresponding downlink data. When the retransmitted data needs to be sent in the second time interval, step 405 may be performed.

405. The base station sends retransmitted data in the second time interval.

For the retransmitted data sent in the second time interval, the terminal device needs to perform step 406 before receiving the retransmitted data.

406. The terminal device determines whether a quantity of symbols included in the second time interval is not less than a preset threshold.

Before receiving the retransmitted data, the terminal device may first determine whether the quantity of symbols included in the second time interval is not less than the preset threshold. If the quantity of symbols included in the second time interval is not less than the preset threshold, step 407 and step 408 are performed, or if the quantity of symbols included in the second time interval is less than the preset threshold, step 409 and step 410 are performed.

407. The terminal device receives the retransmitted data in the second time interval.

408. The terminal device sends reception status information of the retransmitted data in a slot s depending on whether the retransmitted data is correctly received, where if the retransmitted data is correctly received, the reception status information is ACK, or if the retransmitted data is wrongly received, the reception status information is NACK.

409. The terminal device skips receiving the retransmitted data in the second time interval.

410. The terminal device sends reception status information of the retransmitted data in a slot s, where the reception status information is NACK.

A start location of the uplink slot s and the start location of the second time interval are spaced by at least k-i slots, where k is an integer greater than or equal to 1 and less than or equal to 8, and i is a non-negative integer less than k. When determining that the quantity of symbols included in the second time interval is less than the preset threshold, the terminal device may consider that a probability of a failure in receiving the retransmitted data in the second time interval is great. In this case, the terminal device may not receive the retransmitted data borne in the second time interval, but directly feed back the reception status information of the retransmitted data as the NACK in the slot s.

According to the data transmission method provided in this embodiment of the present invention, the base station sends the first downlink data in the first time interval, and sends the second downlink data in the second time interval, where the second time interval is in the second slot of the first special subframe or the first slot of the second special subframe. In this way, all symbols in a DwPTS included in a special subframe can be effectively used to transmit downlink data, thereby avoiding a waste of transmission resources.

Moreover, the control information used to indicate the transmission of the second downlink data is sent in the first slot of the first special subframe or in the slot that is before the second special subframe and is adjacent to the second special subframe, to increase an amount of data borne in the second time interval. In addition, in the redefined HARQ time sequence, different shortest time sequences are configured for time intervals occupying different time domain resources, thereby effectively reducing a feedback latency. In a data retransmission process, if the terminal device determines that the quantity of symbols included in the second time interval is not less than the preset threshold, the terminal device does not receive the retransmitted data in the second time interval, but directly feed back the reception status information of the retransmitted data as the NACK in the slot s, thereby reducing detection costs of the terminal device.

In a new subframe configuration, as shown in FIG. 23A, in a special subframe, a DwPTS occupies six symbols, a GP occupies two symbols, and an UpPTS occupies six symbols. The UpPTS includes only a physical uplink shared channel (Physical Uplink Shared Channel, PUSCH) and a sounding reference signal. How to enable the UpPTS to bear feedback of some reception status information has become an important subject in the art. In an uplink control channel transmission method shown in FIG. 23 of the present invention, feedback of some reception status information is borne by using an UpPTS.

FIG. 23 is a flowchart of an uplink control channel transmission method according to an embodiment of the present invention. The method is applied to a TDD system. As shown in FIG. 23, the method may include the following steps.

501. A network device sends third downlink data in a first slot.

When the network device needs to send downlink data, the network device may send, in the first slot, the downlink data needing to be sent.

502. A terminal device receives the third downlink data in the first slot.

503. The terminal device sends an uplink physical control channel in a second slot, where the uplink physical control channel is used to bear reception status information of the third downlink data, and the uplink physical control channel is in an UpPTS included in a special subframe, and the UpPTS includes six symbols.

The second slot is a slot to which the UpPTS belongs, and a start location of the first slot and a start location of the slot to which the UpPTS belongs are spaced by at least k slots, where k is an integer greater than or equal to 1 and less than or equal to 8.

Specifically, if a start location of the first slot and a start location of a slot to which the UpPTS belongs are spaced by at least k slots, after receiving the third downlink data in the first slot, the terminal device may send, in the slot to which the UpPTS belongs, the uplink physical control channel used to bear the reception status information of the third downlink data.

Before sending the uplink physical control channel, the terminal device may first determine a quantity of physical channel units constituting the uplink physical control channel, then determine a structure of the uplink physical control channel based on the quantity of physical channel units, and finally generate the uplink physical control channel based on the determined structure of the uplink physical control channel.

For example, a correspondence between the quantity of physical channel units and the structure of the uplink physical control channel is shown in Table 4.

**Table 4**

| Structure of an uplink physical control channel | Quantity of physical channel units | Location of a DMRS | Location of control signaling | Whether to perform frequency hopping |
|---|---|---|---|---|
| 1 | 5 | #0, #2 | #1, #3, #4 | Yes |
| 2 | 4 | #0, #2 | #1, #3 | Yes |
| 3 | 3 | #0 | #1, #2 | Not |
| 4 | 2 | #0 | #1 | Not |

The demodulation reference signal (demodulation reference signal, DMRS) is used by a base station to perform uplink channel estimation. The control signaling is used to bear HARQ-ACK information, where the HARQ-ACK information is used to indicate a downlink data reception status, and the reception status includes at least two of the following: ACK, NACK, and DTX. The frequency hopping is used to indicate whether all physical channel units are located in a plurality of frequency bands.

For example, FIG. 23B is a schematic structural diagram of an uplink physical control channel shown by using an example in which a structure of the uplink physical control channel is a structure 1. A hatched part in FIG. 23B is used to bear the HARQ-ACK information.

Moreover, after the UpPTS is used to bear feedback of some reception status information, in the subframe configuration shown in FIG. 21, when K=4, according to the redefined HARQ time sequence and when the UpPTS is used to bear the feedback of the some reception status information, HARQ time sequences in cases of different subframe configurations are shown in Table 5.

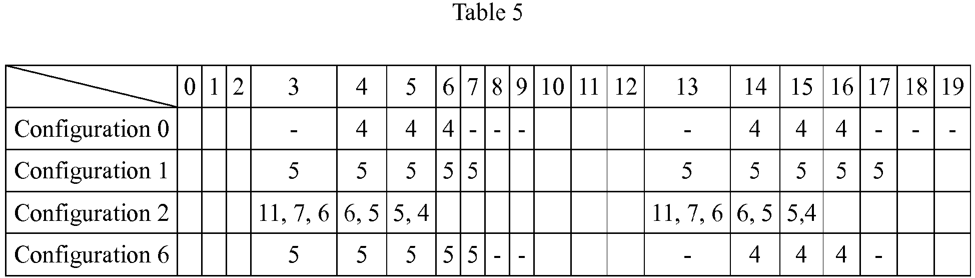

Receiving feedback of reception status information of downlink data by using an HARQ time sequence shown in Table 5 is similar to receiving feedback of reception status information of downlink data by using the HARQ time sequence shown in Table 3 in another embodiment of the present invention, and is not detailed in this embodiment of the present invention again. In addition, it can be learned by comparing Table 5 and Table 3 that, using the UpPTS to bear the feedback of the some reception status information can effectively reduce a load amount in another uplink slot.

504. The network device receives the uplink physical control channel in the second slot.

According to the uplink control channel transmission method provided in this embodiment of the present invention, feedback of some reception status information is borne by using the UpPTS. In addition, using the UpPTS to bear the feedback of the some reception status information can effectively reduce a load amount in another uplink slot.

The foregoing mainly describes the solutions provided in the embodiments of the present invention from the perspective of interaction between network elements. It may be understood that, to implement the foregoing functions, the network elements, such as the network device and the terminal device, include a corresponding hardware structure and/or software module for performing each of the functions. A person of ordinary skill in the art should be easily aware that, the algorithm steps in the examples described with reference to the embodiments disclosed in the present invention may be implemented by hardware or a combination of hardware and computer software in this application. Whether the functions are performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In this embodiment of the present invention, functional modules of the network device may be divided based on the foregoing method examples. For example, each functional module may be divided according to each function, or two or more functions may be integrated into one processing module. The integrated module may be implemented in a form of hardware, or may be implemented in a form of a software functional module. It should be noted that the module division in this embodiment of the present invention is an example, and is merely logical function division. There may be another division manner in an actual implementation.

When various functional modules are divided corresponding to various functions, FIG. 24 is a possible schematic composition diagram of the network device used in the foregoing embodiments. As shown in FIG. 24, the network device may include a sending unit 61.

The sending unit 61 is configured to support the network device in performing step 401 in the data transmission method shown in FIG. 16, and performing step 501 in the uplink control channel transmission method shown in FIG. 23.

In this embodiment of the present invention, further, as shown in FIG. 24, the network device may further include a receiving unit 62.

The receiving unit 62 is configured to support the network device in performing step 404 in the data transmission method shown in FIG. 16, and performing step 504 in the uplink control channel transmission method shown in FIG. 23.

It should be noted that, all related content of each step in the foregoing method embodiments may be cited in function descriptions of a corresponding functional module. Details are not described herein again.

The network device provided in this embodiment of the present invention is configured to perform the foregoing data transmission method to achieve a same effect as the foregoing data transmission method, or is configured to perform the foregoing control channel transmission method to achieve a same effect as the foregoing control channel transmission method.

When an integrated unit is used, FIG. 25 is another possible schematic composition diagram of the network device used in the foregoing embodiments. As shown in FIG. 25, the network device includes a processing module 71 and a communications module 72.

The processing module 71 is configured to control and manage actions of the network device, and/or another process in the technology described in this specification. The communications module 72 is configured to support the network device in communicating with another network entity, for example, communicating with a functional module or a network entity shown in FIG. 15, FIG. 26, or FIG. 27. For example, the communications module 72 is configured to support the network device in performing step 401 and step 404 in the data transmission method shown in FIG. 16, and performing step 501 and step 504 in the uplink control channel transmission method shown in FIG. 23. The network device may further include a storage module 73, configured to store program code and data of the network device.

The processing module 71 may be a processor or a controller. The processor or controller can implement or execute various examples of logical blocks, modules, and circuits that are described with reference to the content disclosed in the present invention. The processor may also be a combination that implements a computing function, for example, a combination of one or more microprocessors or a combination of a DSP and a microprocessor. The communications module 72 may be a transceiver, a transmission/receiving circuit, a communications interface, or the like. The storage module 73 may be a memory.

When the processing module 71 is a processor, the communications module 72 is a transceiver, and the storage module 73 is a memory, the network device used in this embodiment of the present invention may be the network device shown in FIG. 14.

In this embodiment of the present invention, functional modules of the terminal device may be divided based on the foregoing method examples. For example, each functional module may be divided according to each function, or two or more functions may be integrated into one processing module. The integrated module may be implemented in a form of hardware, or may be implemented in a form of a functional module of software. It should be noted that the module division in this embodiment of the present invention is an example, and is merely logical function division. There may be another division manner in an actual implementation.

When various functional modules are divided corresponding to various functions, FIG. 26 is a possible schematic composition diagram of the terminal device used in the foregoing embodiments. As shown in FIG. 26, the terminal device may include a receiving unit 81.

The receiving unit 81 is configured to support the terminal device in performing step 402 and step 406 in the data transmission method shown in FIG. 16, and performing step 502 in the uplink control channel transmission method shown in FIG. 23.

In this embodiment of the present invention, further, as shown in FIG. 26, the terminal device may further include a sending unit 82 and a determining unit 83.

The sending unit 82 is configured to support the terminal device in performing step 403 and step 407 in the data transmission method shown in FIG. 16, and performing step 503 in the uplink control channel transmission method shown in FIG. 23.

The determining unit 83 is configured to support the terminal device in performing step 405 in the data transmission method shown in FIG. 16.

It should be noted that, all related content of each step in the foregoing method embodiments may be cited in function descriptions of a corresponding functional module. Details are not described herein again.

The terminal device provided in this embodiment of the present invention is configured to perform the foregoing data transmission method to achieve a same effect as the foregoing data transmission method, or is configured to perform the foregoing control channel transmission method to achieve a same effect as the foregoing control channel transmission method.

When an integrated unit is used, FIG. 27 is another possible schematic composition diagram of the terminal device used in the foregoing embodiments. As shown in FIG. 27, the terminal device includes a processing module 91 and a communications module 92.

The processing module 91 is configured to control and manage actions of the terminal device, for example, configured to support the terminal device in performing step 405 in the data transmission method shown in FIG. 16, and/or another process in the technology described in this specification. The communications module 92 is configured to support the terminal device in communicating with another network entity, for example, communicating with a functional module or a network entity shown in FIG. 14, FIG. 24, or FIG. 25. For example, the communications module 92 is configured to support the terminal device in performing step 402, step 403, step 406, and step 407 in the data transmission method shown in FIG. 16, and performing step 502 and step 503 in the uplink control channel transmission method shown in FIG. 23. The terminal device may further include a storage module 93, configured to store program code and data of the terminal device.

The processing module 91 may be a processor or a controller. The processor or controller can implement or execute various examples of logical blocks, modules, and circuits that are described with reference to the content disclosed in the present invention. The processor may also be a combination that implements a computing function, for example, a combination of one or more microprocessors or a combination of a DSP and a microprocessor. The communications module 92 may be a transceiver, a transmission/receiving circuit, a communications interface, or the like. The storage module 93 may be a memory.

When the processing module 91 is a processor, the communications module 92 is a transceiver, and the storage module 93 is a memory, the terminal device used in this embodiment of the present invention may be the terminal device shown in FIG. 15.

It should be noted that, all related content of each step in the foregoing method embodiments may be cited in function descriptions of a corresponding functional module. Details are not described herein again.

The terminal device provided in this embodiment of the present invention is configured to perform the foregoing data transmission method to achieve a same effect as the foregoing data transmission method, or is configured to perform the foregoing control channel transmission method to achieve a same effect as the foregoing control channel transmission method.

The foregoing descriptions about implementation manners allow a person skilled in the art to understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or part of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes any medium that can store program code, such as a USB flash drive, a removable hard disk, a read-only memory (English: Read-Only Memory, ROM for short), a random access memory (English: Random Access Memory, RAM for short), a magnetic disk, or an optical disc.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, applied to a time division duplex TDD system, wherein the method comprises:
sending, by a network device, second downlink data in a second time interval, wherein the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval comprises N symbols, wherein N is an integer greater than or equal to 2 and less than or equal to 6.

2. The method according to claim 1, further comprising:
sending, by the network device, first downlink data in a first time interval, wherein the first time interval is in the first slot of the first special subframe.

3. The method according to claim 1 or 2, further comprising:
sending, by the network device, second downlink control information DCI, wherein the second DCI comprises control information used to indicate transmission of the second downlink data, and the second DCI is in the first slot of the first special subframe, or the second DCI is in a slot that is before the second special subframe and is adjacent to the second special subframe.

4. The method according to claim 2 or 3, further comprising:
sending, by the network device, first DCI, wherein the first DCI comprises control information used to indicate transmission of the first downlink data, and the first DCI is in the first slot of the first special subframe.

5. The method according to claim 3, wherein
the second DCI further comprises scheduling information used to indicate transmission of the first downlink data.

6. The method according to any one of claims 1 to 5, after the sending, by a network device, second downlink data in a second time interval, further comprising:
receiving, by the network device, reception status information of the second downlink data in an uplink slot n, wherein a start location of the uplink slot n and a start location of the second time interval are spaced by at least k-i slots, wherein k is an integer greater than or equal to 1 and less than or equal to 8, and i is a non-negative integer less than k.

7. The method according to any one of claims 2 to 5, after the sending, by the network device, first downlink data in a first time interval, further comprising:
receiving, by the network device, reception status information of the first downlink data in an uplink slot m, wherein a start location of the uplink slot m and a start location of the first time interval are spaced by at least k slots, wherein k is an integer greater than or equal to 1 and less than or equal to 8.

8. A data transmission method, applied to a time division duplex TDD system, wherein the method comprises:
receiving, by a terminal device, second downlink data in a second time interval, wherein the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval comprises N symbols, wherein N is an integer greater than or equal to 2 and less than or equal to 6.

9. The method according to claim 8, further comprising:
receiving, by the terminal device, first downlink data in a first time interval, wherein the first time interval is in the first slot of the first special subframe.

10. The method according to claim 8 or 9, further comprising:
receiving, by the terminal device, second downlink control information DCI, wherein the second DCI comprises control information used to indicate transmission of the second downlink data, and the second DCI is in the first slot of the first special subframe, or the second DCI is in a slot that is before the second special subframe and is adjacent to the second special subframe.

11. The method according to claim 9 or 10, further comprising:
receiving, by the terminal device, first DCI, wherein the first DCI comprises control information used to indicate transmission of the first downlink data, and the first DCI is in the first slot of the first special subframe.

12. The method according to claim 10, wherein
the second DCI further comprises scheduling information used to indicate transmission of the first downlink data.

13. The method according to any one of claims 8 to 12, after the receiving, by a terminal device, second downlink data in a second time interval, further comprising:
sending, by the terminal device, reception status information of the second downlink data in an uplink slot n, wherein a start location of the uplink slot n and a start location of the second time interval are spaced by at least k-i slots, wherein k is an integer greater than or equal to 1 and less than or equal to 8, and i is a non-negative integer less than k.

14. The method according to any one of claims 9 to 12, after the receiving, by the terminal device, first downlink data in a first time interval, further comprising:
sending, by the terminal device, reception status information of the first downlink data in an uplink slot m, wherein a start location of the uplink slot m and a start location of the first time interval are spaced by at least k slots, wherein k is an integer greater than or equal to 1 and less than or equal to 8.

15. The method according to any one of claims 8 to 14, when the terminal device needs to receive retransmitted data in the second time interval, further comprising:
determining, by the terminal device, whether a quantity of symbols comprised in the second time interval is not less than a preset threshold; and
receiving, by the terminal device, the retransmitted data in the second time interval if the quantity of symbols comprised in the second time interval is not less than the preset threshold; or
if the quantity of symbols comprised in the second time interval is less than the preset threshold, skipping receiving, by the terminal device, the retransmitted data, and sending reception status information of the retransmitted data in an uplink slot s, wherein the reception status information is negative acknowledgement NACK, a start location of the uplink slot s and the start location of the second time interval are spaced by at least k-i slots, wherein k is an integer greater than or equal to 1 and less than or equal to 8, and i is a non-negative integer less than k.

16. An uplink control channel transmission method, applied to a time division duplex TDD system, wherein the method comprises:
sending, by a network device, third downlink data in a first slot; and
receiving, by the network device, an uplink physical control channel in a second slot, wherein the uplink physical control channel is used to bear reception status information of the third downlink data, the uplink physical control channel is in an uplink pilot timeslot UpPTS comprised in a special subframe, and the UpPTS comprises six symbols.

17. The method according to claim 16, wherein
a start location of the first slot and a start location of a slot to which the UpPTS belongs are spaced by at least k slots, wherein k is an integer greater than or equal to 1 and less than or equal to 8.

18. An uplink control channel transmission method, applied to a time division duplex TDD system, wherein the method comprises:
receiving, by a terminal device, third downlink data in a first slot; and
sending, by the terminal device, an uplink physical control channel in a second slot, wherein the uplink physical control channel is used to bear reception status information of the third downlink data, the uplink physical control channel is in an uplink pilot timeslot UpPTS comprised in a special subframe, and the UpPTS comprises six symbols.

19. The method according to claim 18, wherein
a start location of the first slot and a start location of a slot to which the UpPTS belongs are spaced by at least k slots, wherein k is an integer greater than or equal to 1 and less than or equal to 8.

20. A network device, applied to a time division duplex TDD system, wherein the network device comprises:
a sending unit, configured to send second downlink data in a second time interval, wherein the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval comprises N symbols, wherein N is an integer greater than or equal to 2 and less than or equal to 6.

21. The network device according to claim 20, wherein
the sending unit is further configured to send first downlink data in a first time interval, wherein the first time interval is in the first slot of the first special subframe.

22. The network device according to claim 20 or 21, wherein
the sending unit is further configured to send second downlink control information DCI, wherein the second DCI comprises control information used to indicate transmission of the second downlink data, and the second DCI is in the first slot of the first special subframe, or the second DCI is in a slot that is before the second special subframe and is adjacent to the second special subframe.

23. The network device according to claim 21 or 22, wherein
the sending unit is further configured to send first DCI, wherein the first DCI comprises control information used to indicate transmission of the first downlink data, and the first DCI is in the first slot of the first special subframe.

24. The network device according to claim 22, wherein
the second DCI sent by the sending unit further comprises scheduling information used to indicate transmission of the first downlink data.

25. The network device according to any one of claims 20 to 24, further comprising a receiving unit, wherein
the receiving unit is configured to receive reception status information of the second downlink data in an uplink slot n, wherein a start location of the uplink slot n and a start location of the second time interval are spaced by at least k-i slots, wherein k is an integer greater than or equal to 1 and less than or equal to 8, and i is a non-negative integer less than k.

26. The network device according to any one of claims 21 to 24, further comprising a receiving unit, wherein
the receiving unit is configured to receive reception status information of the first downlink data in an uplink slot m, wherein a start location of the uplink slot m and a start location of the first time interval are spaced by at least k slots, wherein k is an integer greater than or equal to 1 and less than or equal to 8.

27. A terminal device, applied to a time division duplex TDD system, wherein the terminal device comprises:
a receiving unit, configured to receive second downlink data in a second time interval, wherein the second time interval is in the second slot of a first special subframe or the first slot of a second special subframe, the first special subframe is a special subframe of which downlink pilot timeslot duration is greater than 0.5 millisecond, the second special subframe is a special subframe of which downlink pilot timeslot duration is less than 0.5 millisecond, and the second time interval comprises N symbols, wherein N is an integer greater than or equal to 2 and less than or equal to 6.

28. The terminal device according to claim 27, wherein
the receiving unit is further configured to receive first downlink data in a first time interval, wherein the first time interval is in the first slot of the first special subframe.

29. The terminal device according to claim 27 or 28, wherein
the receiving unit is further configured to receive second downlink control information DCI, wherein the second DCI comprises control information used to indicate transmission of the second downlink data, and the second DCI is in the first slot of the first special subframe, or the second DCI is in a slot that is before the second special subframe and is adjacent to the second special subframe.

30. The terminal device according to claim 28 or 29, wherein
the receiving unit is further configured to receive first DCI, wherein the first DCI comprises control information used to indicate transmission of the first downlink data, and the first DCI is in the first slot of the first special subframe.

31. The terminal device according to claim 29, wherein
the second DCI received by the receiving unit further comprises scheduling information used to indicate transmission of the first downlink data.

32. The terminal device according to any one of claims 27 to 31, further comprising a sending unit, wherein
the sending unit is configured to send reception status information of the second downlink data in an uplink slot n, wherein a start location of the uplink slot n and a start location of the second time interval are spaced by at least k-i slots, wherein k is an integer greater than or equal to 1 and less than or equal to 8, and i is a non-negative integer less than k.

33. The terminal device according to any one of claims 28 to 31, further comprising a sending unit, wherein
the sending unit is further configured to send reception status information of the first downlink data in an uplink slot m, wherein a start location of the uplink slot m and a start location of the first time interval are spaced by at least k slots, wherein k is an integer greater than or equal to 1 and less than or equal to 8.

34. The terminal device according to any one of claims 27 to 33, when the terminal device needs to receive retransmitted data in the second time interval, further comprising a determining unit, wherein
the determining unit is configured to determine whether a quantity of symbols comprised in the second time interval is not less than a preset threshold;
the receiving unit is further configured to receive the retransmitted data in the second time interval if the determining unit determines that the quantity of symbols comprised in the second time interval is not less than the preset threshold; and
the sending unit is further configured to: if the determining unit determines that the quantity of symbols comprised in the second time interval is less than the preset threshold, skip receiving, by the terminal device, the retransmitted data, and send reception status information of the retransmitted data in an uplink slot s, wherein the reception status information is negative acknowledgement NACK, a start location of the uplink slot s and the start location of the second time interval are spaced by at least k-i slots, wherein k is an integer greater than or equal to 1 and less than or equal to 8, and i is a non-negative integer less than k.

35. A network device, applied to a time division duplex TDD system, wherein the network device comprises:
a sending unit, configured to send third downlink data in a first slot; and
a receiving unit, configured to receive an uplink physical control channel in a second slot, wherein the uplink physical control channel is used to bear reception status information of the third downlink data, the uplink physical control channel is in an uplink pilot timeslot UpPTS comprised in a special subframe, and the UpPTS comprises six symbols.

36. The network device according to claim 35, wherein
a start location of the first slot and a start location of a slot to which the UpPTS belongs are spaced by at least k slots, wherein k is an integer greater than or equal to 1 and less than or equal to 8.

37. A terminal device, applied to a time division duplex TDD system, wherein the terminal device comprises:
a receiving unit, configured to receive third downlink data in a first slot; and
a sending unit, configured to send an uplink physical control channel in a second slot, wherein the uplink physical control channel is used to bear reception status information of the third downlink data, the uplink physical control channel is in an uplink pilot timeslot UpPTS comprised in a special subframe, and the UpPTS comprises six symbols.

38. The terminal device according to claim 37, wherein
a start location of the first slot and a start location of a slot to which the UpPTS belongs are spaced by at least k slots, wherein k is an integer greater than or equal to 1 and less than or equal to 8.

39. A network device, applied to a time division duplex TDD system, wherein the network device comprises a processor, a memory, and a transceiver, wherein
the memory is configured to store a computer executable instruction, and when the network device runs, the processor executes the computer executable instruction stored in the memory, to enable the terminal device to perform the data transmission method according to any one of claims 1 to 7 or perform the uplink control channel transmission method according to claim 16 or 17.

40. A terminal device, applied to a time division duplex TDD system, wherein the terminal device comprises a processor, a memory, and a transceiver, wherein
the memory is configured to store a computer executable instruction, and when the terminal device runs, the processor executes the computer executable instruction stored in the memory, to enable the terminal device to perform the data transmission method according to any one of claims 8 to 15 or perform the uplink control channel transmission method according to claim 18 or 19.
